# EUROPÄISCHE PATENTSCHRIFT

(11) **EP 0 687 711 B1**
(45) Veröffentlichungstag und Bekanntmachung des Hinweises auf die Patenterteilung: **07.08.2002**
(21) Anmeldenummer: 95109320.2
(22) Anmeldetag: 16.06.1995
(51) Int. Cl.: C08L 97/02, C08L 101/00

(54) **Faserverbundwerkstoff und Verfahren zu seiner Herstellung**
Fibre composite material and process for its production
Matériau composite fibreux et procédé pour le produire

(30) Priorität: 16.06.1994 DE 4420817; 01.06.1995 DE 19520899
(43) Veröffentlichungstag der Anmeldung: 20.12.1995
(73) Patentinhaber: Deutsches Zentrum für Luft- und Raumfahrt e.V., 53175 Bonn (DE)
(72) Erfinder: Herrmann, Axel, Dr., D-31228 Peine (DE); Hanselka, Holger, Dr., D-38122 Braunschweig (DE); Niederstadt, Günter, Prof. Dr., D-38302 Wolfenbüttel (DE)
(74) Vertreter: Einsel, Martin, Dipl.-Phys.

(56) Entgegenhaltungen:
- DE-A- 3 641 466
- DE-A- 4 240 174
- FR-A- 928 365
- FR-A- 946 123

## Beschreibung

Die Erfindung betrifft einen Faserverbundwerkstoff sowie ein Verfahren zu seiner Herstellung.

Faserverbundwerkstoffe haben sich aufgrund ihrer guten gewichtsbezogenen Eigenschaften, der Werkstoffanisotropie und ihrer Nutzbarkeit für "maßgeschneiderte Strukturen" sowie ihre rationelle Verarbeitbarkeit in vielen Bereichen der Technik etabliert.

Die Faserverbundwerkstoffe bestehen dabei aus einem Verstärkungsmaterial und einer Matrix. Als Verstärkungsmaterial finden dabei hochfeste Fasern Verwendung, beispielsweise Glasfasern, Kohlenstoffasern, aber auch Fasern aus hochfesten Kunststoffen. Als Matrix enthalten diese bekannten Faserverbundwerkstoffe im allgemeinen duroplastische oder thermoplastische Kunststoffe auf petrochemischer Basis. Sowohl die Fasern als auch die Werkstoffe der Matrix sind unverrottbar und erfordern daher am Ende ihrer Gebrauchszeit eine Entsorgung durch Deponie oder Zerkleinerung zu Granulat, das dann anderweitig eingesetzt werden kann.

Aufgabe der Erfindung ist es, einen Faserverbundwerkstoff und ein Verfahren zu seiner Herstellung aufzuzeigen, bei denen eine anderweitige Entsorgung möglich ist.

Diese Aufgabe wird gemäß der Erfindung gelöst durch biologisch abbaubare Fasern als Verstärkungsmaterial und einer Matrix aus einem Material auf der Basis von nachwachsenden Rohstoffen, wobei der Fasergehalt zwischen 20 % und 60 % liegt, und die Fasern in dem Faserverbundwerkstoff unidirektional ausgerichtet sind und in der Matrix als Bettungsmasse eingebettet vorliegen.

Besonders bevorzugt ist es, wenn die Faser und/oder das Material der Matrix kompostierbar sind. Kompostierbare Stoffe sind nicht nur biologisch abbaubar, sie bauen auch binnen einer definierten Zeit bis zu einem definierten Grad ab. Dadurch sind die so aufgebauten Faserverbundwerkstoffe auch für Kompostieranlagen akzeptabel.

Es ist bekannt, minderwertige Fäden oder Garne aus Baumwolle durch Behandeln mit Cellulosediazetat zu veredeln (DE-PS 705 428). Verwendet wird hierzu eine Cellulosediazetatlösung in konzentrierter Essigsäure, der gegebenenfalls Weichmacher und Pigmente zugesetzt werden können. Hier handelt es sich um eine Schlichte oder Appretur, die den Fäden Geschmeidigkeit und Glätte verleiht.

Die erfindungsgemäßen Faserverbundwerkstoffe können in allen Anwendungsfällen eingesetzt werden, bei denen die speziellen Vorteile von Faserverbundwerkstoffen zum Tragen kommen, wie geringe Wandstärke der Strukturen und deshalb geringes Gewicht. Besonders vorteilhaft kann der Einsatz sein bei Bauteilen, die in großer Menge auf den Markt kommen und nach einer gewissen Zeit entsorgt werden müssen, wie dies beispielsweise bei Teilen der Innenausstattung von Kraftfahrzeugen der Fall ist. Aus dem erfindungsgemäßen Faserverbundwerkstoff hergestellte Teile brauchen nicht mehr deponiert oder als Sekundärrohstoffe aufwendig verkleinert werden. Sie können vielmehr, eventuell nach Grobzerkleinerung, in üblicher Weise kompostiert werden.

Als Verstärkungsmaterial werden insbesondere Fasern mit einer Bruchdehnung von weniger als 8 % eingesetzt. Fasern mit einer solchen, relativ geringen Längsdehnung sind den Stabilitätsanforderungen besser gewachsen.

Besonders bevorzugt ist es dabei, wenn die Fasern aus Naturfasern, insbesondere Ramie, Flachs, Sisal, Jute oder Hanf bestehen. Naturfasern als nachwachsender Rohstoff haben in vielen Bereichen der Technik aus ökonomischen und ökologischen Gründen eine Renaissance erfahren. Durch gezielte Ausnutzung gerade der Eigenschaften der vorgenannten Fasern können mit den Naturprodukten sogar hochwertige technische Produkte unerwartet bereitgestellt werden.

Hinsichtlich der Festigkeiten (festgelegt etwa durch die materialabhängige Reißlänge in km) sind z.B. Ramie- oder Flachsfasem der Glasfaser nur geringfügig unterlegen. Für steifigkeitsrelevante Konstuktionen können durch Einsatz von Hanffasern sogar bessere Eigenschaften als mit Glasfasern erzielt werden.

Gelegentlich finden Naturfasern schon jetzt in technischen Produkten Anwendung, allerdings sind sie dann gebettet in klassische Matrixsysteme auf petrochemischer Basis.

Besondere Stabilität erhält der Faserverbundwerkstoff, wenn als Fasern gedrehte oder gezwirnte Garne eingesetzt werden, wenn die Fasern unidirektional im Verbund angeordnet sind. Da Naturfasem bekanntlich eine endliche Länge aufweisen, sind sie daher bevorzugt in Form von gedrehten oder gezwirnten Garnen oder als Hip-Garne einzubringen.

Während in dem Faserverbundwerkstoff die biologisch abbaubaren Fasern als Verstärkungsmaterial vornehmlich die auftretenden Lasten aufnehmen, ist die Matrix, auch als Bettungsmasse bezeichnet, für die Formstabiliät, zur Kraftübertragung zwischen den Fasern des Verstärkungsmaterials sowie zum Schutz der Fasern vorgesehen.

Als biologisch abbaubares Material sind insbesondere Biopolymere geeignet, also Stoffe, die nicht nur biologisch abbaubar sind, sondern auch aus nachwachsenden Rohstoffen entstehen. Synthetisch gewonnene Polymere sind technisch vom Grundsatz her ebenfalls geeignet und lösen die Aufgabe, soweit sie biologisch abbaubar sind.

Als Biopolymere für die Matrix kommen insbesondere Cellulosediazetat, Celluloseazetat, Lignin, Stärkederivate, Polyhydroxybuttersäure oder Polyalkylencarbonate in Betracht.

Als möglicherweise ebenfalls geeignet getestet wurden auch Matrixsysteme auf der Basis von Polycaprotlacton, geschäumter Kartoffelstärke, plastischer Stärke, regenerierter Cellulose, Polyolefinen, Maisstärke, Mischungen aus Stärke und synthetischen Polymeren, Stärkeester, PHB, Polyesteramid, Celluloseaazetatester, Casein, Shellack, Stärkeazetat und Gelatine Folien.

Die gewünschten Eigenschaften des Matrixmaterials sind je nach Ausführung eine Bruchdehnung von 3 - 10 %, eine Zugfestigkeit von 30 - 100 Mpa, eine Wärmeformbeständigkeit von 60 - 200 °C und ein E-Modul von 1-6 Gpa.

Die Matrixmaterialien werden dabei als Granulat, Pulver, als Folie, selbst als Fasern und auch als Emulsion aufgebracht.

Cellulosediazetat, das biologisch abbaubar ist, kann etwa in Form einer Lösung in Essigester angewendet werden. Mit dieser Lösung können dann die Fasern, die in Form von Fäden, Geweben, Matten oder Vliesen eingesetzt werden, getränkt werden.

Zum Lösen wird Essigester bis kurz vor den Siedepunkt (77,1°C) auf ca. 70°C erwärmt. Eine vorgegebene Menge Cellulosediazetat wird langsam unter ständigem Rühren bei Konstanthaltung der Temperatur zugegeben. Nach maximal sechs Stunden ist das Granulat im Essigester gelöst.

Bei Verwendung von 7 I Essigester, die etwa 6.300 g entsprechen, wird durch Zugaben von 945 g Granulat eine 15%-ige Lösung, von 1.134 g eine 18%-ige Lösung und von 1.260 g eine 20%-ige Lösung erhalten. Solche unterschiedlichen Lösungen können entsprechend den jeweils vorliegenden Verarbeitungsbedingungen eingesetzt werden.

Für die Herstellung von Strukturen können mit Cellulosediazetat getränkte Halbzeuge (Prepregs) verwendet werden.

Unidirektionale Halbzeuge können in Wickeltechnik hergestellt werden aus gezwimten Fäden oder Hip-Garnen, die eine Tränkstation durchlaufen. Die Fäden können aber auch nach dem Wickeln mit bekannten Verfahren getränkt werden. Hip-Garne sind Garne, bei denen die Fasern unidirektional angeordnet und durch einen spiralförmig umschlingenden Faden zusammengehalten werden.

Für flächige Verstärkungen werden Gewebe, Matten oder Vliesstoffe in Einzelschichten oder in Schichtungen aus mehreren Schichten mit der Lösung getränkt.

Die so gebildeten Schichtstoffe werden abgelüftet, wofür bei ca. 60°C etwa 15 bis 20 Minuten benötigt werden.

Eine andere Möglichkeit, Strukturen herzustellen besteht darin, flächige Verstärkungslagen abwechselnd mit Folien aus Cellulosediazetat zu schichten. Die Schichtung wird dann in einer Form auf etwa 40 °C über Schmelztemperatur, was etwa 180 °C entspricht, erwärmt und mit Druck von etwa 15 bar verpreßt. Die Entnahmetemperaturen sollten dabei kleiner als 120°C sein.

Naturfasern erleiden unter der Einwirkung erhöhter Temperaturen über die Zeit Degradationen in ihren mechanischen Eigenschaften. Es ist daher bei der Temperatur-Zeit-Führung zu beachten, daß die Temperatureinwirkung auf die Fasern auf einem Minimum gehalten wird und daß die minimal benötigten Temperaturen nicht überschritten werden.

Bei der Herstellung von Faserverbundwerkstoffen, speziell mit thermoplastischer Matrix, kann prozeßbedingt Temperaturbeanspruchung auftreten. Zugversuche an Ramiefasem haben gezeigt, daß die Reißkraft gemessen in Restfestigkeit gegenüber unbehandelten Fasern von der Prozeßtemperatur und der Zykluszeit sehr deutlich in Zusammenwirkung beeinflußt wird:

Während bei einer Prozeßtemperatur von 150 °C die Restfestigkeit nach einer Stunde noch 93 % und nach vier Stunden noch 83 % beträgt, fällt sie bei einer Prozeßtemperatur von 175 °C nach einer Stunde bereits auf 78 % und nach vier Stunden auf 59 % ab. Bei einer Prozeßtemperatur von 200 °C beträgt sie schon nach einer Stunde nur noch 59 % und nach vier Stunden 32 %.

Alle Verfahren zur Herstellung der Faserverbundwerkstoffe sollten daher bei möglichst niedrigen Temperaturen und kurzen Zykluszeiten liegen.

Erfindungsgemäß wird daher auf ganz rasche kurze Aufheizzeiten Wert gelegt, um die Gesamtzeit mit der Temperaturbelastung kurz zu halten. Bei Presstemperaturen um 175 °C und Zykluszeiten unterhalb von einer Stunde läßt sich so der Festigkeitsverlust bei weniger als 20 % halten.

Infolgedessen ist es bevorzugt, wenn die Matrix und die Fasern zunächst locker zusammengebracht werden, dann mittels rasch wirkender Heizung aufgeschmolzen werden (Temperaturen um 160 - 200 °C), um danach im kalten Werkzeug verpreßt zu werden, wodurch die Temperatur rasch wieder aus dem beanspruchenden Bereich fällt, der nach der Aufschmelzung ja nicht mehr beibehalten werden muß. Durch das kalte Werkzeug wird die in der Schmelze vorhandene Wärme schnellstmöglich wieder abgeführt.

Als Matrixmaterial kommen nicht nur Thermoplaste, sondern auch Duroplaste in Betracht. Zu denken ist dabei etwa an das Matrixmaterial Lignin.

Der besondere Vorteil eine so hergestellten Faserverbundwerkstoffes liegt in der sinnvollen Übertragung einer aus der Natur vorgegebenen Stategie in die Technik:

Es wird wie bei der Herstellung von Holz in der Natur ein Fasergeflecht aus Cellulose in eine Ligninmatrix eingebunden.

Besonders aussichtsreich ist auch der Einsatz von Co-Mingeled-Garnen, also zusammen mit Naturfasern zum Garn versponnenen Biopolymeren in Form von Kurzfasern, Langfasem, Bändchen, etc. Diese Co-Mingeled-Garne haben den Vorzug, daß die beiden Bestandteile des späteren Faserverbundwerkstoffs von Anfang an innig miteinander verbunden, nämlich zum Garn versponnen, sind, was später die erforderliche Zyklusdauer bei dem Aufheizvorgang entsprechend verringert.

Für die Herstellung von Strukturbauteilen können durch Tränken mit gelöstem Cellulosediazetat oder durch Schichtung mit Folien aus Cellulosediazetat hergestellte Halbzeuge verwendet werden. Die Halbzeuge werden entsprechend der anisotropen Stukturanalyse geschichtet. Dabei können z.B. im Bereich von Lasteinleitungen als Verstärkungen UD-Laminate als Halbzeug zum Einsatz kommen, während in biegeweichen, stark gekrümmten Bereichen Matten oder Vlies-Halbzeuge von Vorteil sind.

Der Schichtaufbau wird dann erwärmt und verpreßt. Die Erwärmung kann besonders zweckmäßig mittels Infrarotheizung auf 30 - 50 °C über Schmelztemperatur, das sind bei den bevorzugten Materialien etwa um 180°C, erfolgen, worauf die Schichtung dann in einem kalten Werkzeug verpreßt wird. Die Entformung kann dann bei Temperaturen unter 120°C erfolgen.

Bei Metallformen bereitet die Entformung keine Probleme. Insbesondere bei der Pressung in kalten Werkzeugen können auch Formen mit Formoberflächen aus üblichen Faserverbundwerkstoffen verwendet werden.

Wickelbare Strukturbauteile können in konventioneller Wickeltechnik hergestellt werden. Solche Strukturen werden auf der Kontur der zu wickelnden Struktur entsprechend geformte Wickeldome gewickelt. Der Dom kann beheizbar sein. Dies kann vorteilhaft sein für eine schnelle Ablüftung der Essigsäure. Die gewickelte Struktur kann bei kleinem Durchmesser mit einem Schrumpfschlauch sonst aber vorzugsweise im Vakuumsack im Autoklaven bei den oben angegebenen Drücken und Temperaturen verdichtet werden. Dabei können auch Gegenformen für die Rückseite der Strukturen verwendet werden.

Strukturelemente lassen sich auch mit der Handlaminiertechnik in Verbindung mit der Vakuumtechnik einsetzen. Dazu wird die flächige Verstärkung in eine Negativform eingebracht und dort mit den üblichen Werkzeugen mit der Cellulosediazetatlösung imprägniert. Ein solcher Verbund kann dabei schichtweise aufgebaut und imprägniert werden. Das so durchtränkte Laminat wird dann mit einer Drainagelage überdeckt und mit der Negativform in einen Vakuumsack eingebracht, an den ein Vakuum angelegt wird, das bei 0,2 bar liegen kann, und zwar so lange bis sämtliches Lösungsmittel abgezogen ist. Je nach Laminatdicke kann das bis zu 24 Stunden dauern. Dieser Zeitraum läßt sich durch Einwirken von Wärme verkürzen. Wenn der Vakuumsack bei der Evakuierung in einen Autoklaven eingebracht wird, kann nach der vollständigen Ablüftung des Lösungsmittels der Druck auf etwa 15 bar und die Temperatur von 180°C erhöht werden, bei der das Cellulosediazetat sich verflüssigt.

Im Hinblick auf die oben erwähnte Gefahr der Degradation der Reißkraft von Naturfasern bei Wärmeeinwirkung sollte die Zeitdauer der Wärmeeinwirkung von 180°C auf die für das Schmelzen der Matrix unbedingt notwendige Zeit beschränkt werden. Darüberhinaus ist dann ein möglichst schnelles Abkühlen anzustreben.

Bei der Matrix aus Cellulosediazetat handelt es sich um eine thermoplastische Matrix. Die maximale Temperaturbelastung der mit Faserverbundwerkstoffen gemäß der Erfindung hergestellten Strukturen sollte daher wesentlich unter der Erweichungstemperatur liegen und maximal 100 - 120°C betragen. Die Festigkeitseigenschaften von Faserverbundwerkstoffen gemäß der Erfindung reichen für sehr viele Anwendungsfälle aus, insbesondere solchen, bei denen insbesondere Formstabilität verlangt wird, wie beispielsweise im Automobilbau für Innenverkleidungen, Armaturenbretter, Schalttafeln. Dies trifft auch zu für Formkörper, die in der Möbelindustrie verwendet werden, wie beispielsweise Sitzschalen oder Lattenroste.

Auch bei Sandwich-Strukturen, wobei als Substrat beispielsweise Balsaholz verwendet wird, sind keine extremen Festigkeitswerte erforderlich. Dies trifft beispielsweise zu für Tischplatten, Möbelwände, Regalböden, Bettenhäupte. Sandwich-Strukturen können auch vorteilhaft für Aufbauten für Sonderfahrzeuge wie Wohnmobile oder Rettungswagen eingesetzt werden, bei denen es auf geringes Gewicht ankommt.

Rohrleitungssysteme, deren Funktion nur für eine vorbestimmte Zeitdauer gewährleistet sein muß, lassen sich vorteilhaft aus Faserverbundwerkstoffen gemäß der Erfindung herstellen. Dies trifft beispielsweise zu bei Rohren für Rohrleitungssysteme zur Deponiebewässerung und -belüftung. Solche Rohre können dann nach Ende der geforderten Standzeit verrotten. Weitere Anwendungsfälle sind beispielsweise großvolumige Bauteile, wie Abdeckhauben und dergleichen.

## Patentansprüche

1. Faserverbundwerkstoff,
**gekennzeichnet durch** Fasern auf der Basis von nachwachsenden Rohstoffen als Verstärkungsmaterial und einer Matrix aus einem Material auf der Basis von nachwachsenden Rohstoffen, wobei der Fasergehalt zwischen 20 % und 60 % liegt, und die Fasern in dem Faserverbundwerkstoff unidirektional ausgerichtet sind und die Fasem in der Matrix als Bettungsmasse eingebettet vorliegen.

2. Faserverbundwerkstoff nach Anspruch 1,
**dadurch gekennzeichnet,**
**daß** das Material für die Matrix ausgewählt ist unter Celluloseacetat Cellulosediacetat, Lignin, einem Stärkederivat, Polyhydroxybuttersäure, Polyalkylencarbonaten, Casein, Shellack, Stärkeester, Stärkeacetat oder Polyesteramid.

3. Faserverbundwerkstoff nach Anspruch 1 oder 2,
**dadurch gekennzeichnet,**
**daß** die Fasern und/oder das Material der Matrix kompostierbar sind.

4. Faserverbundwerkstoff nach einem der Ansprüche 1 bis 3,
**dadurch gekennzeichnet,**
**daß** die Fasem eine Bruchdehnung von weniger als 8 % besitzen.

5. Faserverbundwerkstoff nach einem der vorhergehenden Ansprüche,
**dadurch gekennzeichnet,**
**daß** die Fasern ausgewählt sind unter Ramie, Flachs, Sisal, Jute und Hanf.

6. Faserverbundwerkstoff nach einem der vorhergehenden Ansprüche,
**dadurch gekennzeichnet,**
**daß** die als Fasern gedrehte oder gezwimte Garne oder in Form von Hip-Garnen eingesetzt werden.

7. Faserverbundwerkstoff nach einem der vorhergehenden Ansprüche,
**dadurch gekennzeichnet,**
**daß** die Fasern in Form von Vliesen, Matten oder Geweben angeordnet sind.

8. Faserverbundwerkstoff nach einem der vorhergehenden Ansprüche,
**dadurch gekennzeichnet,**
**daß** das Material für die Matrix in Form von Folien eingesetzt wird.

9. Faserverbundwerkstoff nach Anspruch 7 und 8,
**dadurch gekennzeichnet,**
**daß** das Verstärkungsmaterial und die Matrix in Schichtform abwechselnd übereinandergeschichtet sind.

10. Faserverbundwerkstoff nach einem der vorhergehenden Ansprüche,
**dadurch gekennzeichnet,**
**daß** die Matrix ihrerseits in Form von vernadelbaren Fasern oder Bändchen mit einem Vlies aus Verstärkungsmaterial vemadelt oder als spinnfähige Fasern mit Verstärkungsmaterial zum Garn versponnen oder als Mischgewebe angeordnet ist.

11. Verfahren zur Herstellung von Faserverbundwerkstoff nach einem der vorstehenden Ansprüche,
**dadurch gekennzeichnet,**
**daß** das Material für die Matrix gelöst und mit der Lösung das Verstärkungsmaterial getränkt und anschließend das Lösungsmittel abgelüftet wird.

12. Verfahren nach Anspruch 11,
**dadurch gekennzeichnet,**
**daß** das getränkte Verstärkungsmaterial entsprechend der Struktur auf 30 - 50° C über Schmelztemperatur erwärmt und in einer Form gepreßt wird.

13. Verfahren zur Herstellung von Faserverbundwerkstoff nach einem der Ansprüche 1 bis 10,
**dadurch gekennzeichnet,**
**daß** das Verstärkungsmaterial in Form von Geweben, Matten oder Vliesen abwechselnd mit Folien aus einem Material für die Matrix entsprechend der Struktur geschichtet und die Schichtung auf 30 - 50 ° C über Schmelztemperatur erwärmt und gepreßt wird.

14. Verfahren nach einem der Ansprüche 11 bis 13,
**dadurch gekennzeichnet,**
**daß** die Pressung mit einem Druck von 15 bar durchgeführt wird.

15. Verfahren nach einem der Ansprüche 11 bis 14,
**dadurch gekennzeichnet,**
**daß** die Schichtung oder Mischung aus Verstärkungsmaterial und Matrix mittels Infrarotheizung oder anderer rasch wirkender Heizung auf 30 - 50° C über Schmelztemperatur erwärmt und dann in einem kalten Formwerkzeug verpreßt wird.

16. Verfahren zur Herstellung eines Faserverbundwerkstoffs nach einem der Ansprüche 1 bis 10,
**dadurch gekennzeichnet,**
**daß** das Material der Matrix in Form von Kurzfasern, Langfasern oder Bändchen mit einem Vlies aus Naturfasem vernadelt oder zusammen mit Naturfasern zum Gam versponnen oder zusammen mit Gamen aus Naturfasem zu Mischgewebe verarbeitet wird und das entstandene Zwischenprodukt auf 30 - 50° C über Schmelztemperatur erwärmt und gepreßt wird.

17. Verfahren zur Herstellung eines Faserverbundwerkstoffes nach einem der Ansprüche 12, 13, 15 oder 16,
**dadurch gekennzeichnet,**
**daß** die Erwärmung auf 40° C über Schmelztemperatur erfolgt.

18. Verwendung eines Faserverbundwerkstoffes nach einem der Ansprüche 1 bis 10 zur Herstellung von Strukturbauteilen.

## Claims

1. A composite fibre material,
**characterised by** a reinforcing material which is in the form of fibres based on renewable raw materials and a matrix consisting of a material based on renewable raw materials wherein the fibre content lies between 20% and 60%, and wherein the fibres are aligned unidirectionally in the composite fibre material and the fibres are embedded in the matrix in the form of a bedding substance.

2. A composite fibre material in accordance with Claim 1,
**characterised in that**
the material for the matrix is selected from amongst cellulose acetate, cellulose diacetate, lignin, a starch derivative, polyhydroxy butyric acid, polyalkylene carbonates, casein, shellac, amylum ester, amylum acetate or polyester amide.

3. A composite fibre material in accordance with Claim 1 or 2,
**characterised in that**
the fibres and/or the material of the matrix are compostible.

4. A composite fibre material in accordance with any of Claims 1 to 3,
**characterised in that**
the breaking elongation of the fibres is less than 8%.

5. A composite fibre material in accordance with any of the preceding Claims,
**characterised in that**
the fibres are selected from amongst rami, flax, sisal, jute and hemp.

6. A composite fibre material in accordance with any of the preceding Claims,
**characterised in that**
the fibres are in the form of twisted or spun yarns, or are in the form of hip yarns.

7. A composite fibre material in accordance with any of the preceding Claims,
**characterised in that**
the fibres are arranged in the form of non-woven fabrics, matting or woven fabrics.

8. A composite fibre material in accordance with any of the preceding Claims,
**characterised in that**
the material of the matrix is employed in the form of films.

9. A composite fibre material in accordance with Claim 7 and 8,
**characterised in that**
the reinforcing material and the matrix are layered alternately one above the other so as to produce a layered shape.

10. A composite fibre material in accordance with any of the preceding Claims,
**characterised in that**
the matrix, which, for its part, is in the form of fibres or ribbon-like fibres that are adapted for a needling technique, is needle-punched to a non-woven fabric consisting of a reinforcing material, or, it is in the form of spinnable fibres that are spun with a reinforcing material to form a yarn, or, it is arranged in the form of a blended fabric.

11. A method of manufacturing a composite fibre material in accordance with any of the preceding Claims,
**characterised in that**
the material for the matrix is dissolved and the reinforcing material is then impregnated with the solution whereafter the solvent is drawn off.

12. A method in accordance with Claim 11,
**characterised in that**
the impregnated reinforcing material is heated in correspondence with the structure to 30 - 50° C above the melting temperature and is then compressed in a mould.

13. A method of manufacturing a composite fibre material in accordance with any of the Claims 1 to 10,
**characterised in that**
the reinforcing material is in the form of woven fabrics, matting or non-woven fabrics and is coated alternately with films of a material for the matrix in correspondence with the structure, whereafter the layered arrangement is heated to 30 - 50° C above the melting temperature and compressed.

14. A method in accordance with any of the Claims 11 to 13,
**characterised in that**
the compressing process is carried out at a pressure of 15 bar.

15. A method in accordance with any of the Claims 11 to 14,
**characterised in that**
the layered arrangement or mixture of reinforcing material and matrix is heated by means of an infra-red heating process or some other rapidly effective heating process to 30 - 50° C above the melting temperature and is then subjected to pressure in a cold moulding tool.

16. A method of manufacturing a composite fibre material in accordance with any of the Claims 1 to 10,
**characterised in that**
the material of the matrix in the form of short fibres, long fibres or ribbon-like fibres is needle-punched to a non-woven material of natural fibres, or is spun together with natural fibres to form a yarn, or is processed together with yarns of natural fibres to form a blended fabric, whereafter the resultant intermediate product is heated to 30 - 50° C above the melting temperature and compressed.

17. A method of manufacturing a composite fibre material in accordance with any of the Claims 12, 13, 15 or 16,
**characterised in that**
the heating process is effected at 40° C above the melting temperature.

18. The use of a composite fibre material in accordance with any of the Claims 1 to 10 for manufacturing structural components.

## Revendications

1. Matériau composite renforcé par des fibres, **caractérisé par** des fibres à base de matières premières à dilatation ultérieure comme matériau de renforcement et par une matrice constituée d'un matériau à base de matières premières à dilatation ultérieure, moyennant quoi la teneur en fibres est comprise entre 20 % et 60 % et les fibres dans le matériau composite renforcé par des fibres ont une orientation unidirectionnelle et sont incorporées dans la matrice comme masse d'inclusion.

2. Matériau composite renforcé par des fibres selon la revendication 1, **caractérisé en ce que** le matériau de la matrice est sélectionné parmi l'acétate de cellulose, le di-acétate de cellulose, la lignine, un dérivé d'amidon, l'acide polyhydroxy-butyrique, les polyalkylène-carbonates, la caséine, le shellack, l'ester d'amidon, l'acétate d'amidon ou le polyamide d'ester.

3. Matériau composite renforcé par des fibres selon la revendication 1 ou 2, **caractérisé en ce que** les fibres et/ou le matériau de la matrice sont compostables.

4. Matériau composite renforcé par des fibres selon l'une des revendications 1 à 3, **caractérisé en ce que** les fibres ont un allongement à la rupture inférieur à 8 %.

5. Matériau composite renforcé par des fibres selon l'une des revendications précédentes, **caractérisé en ce que** les fibres sont sélectionnées parmi le ramie, le lin, le sisal, le jute et le chanvre.

6. Matériau composite renforcé par des fibres selon l'une des revendications précédentes, **caractérisé en ce que** l'on utilise comme fibres des fils tordus ou retordus en fibres ou sous forme de fils "hip".

7. Matériau composite renforcé par des fibres selon l'une des revendications précédentes, **caractérisé en ce que** les fibres sont disposées sous forme de matelas, de nattes ou de tissus.

8. Matériau composite renforcé par des fibres selon l'une des revendications précédentes, **caractérisé en ce que** le matériau de la matrice est utilisé sous forme de feuilles.

9. Matériau composite renforcé par des fibres selon les revendications 7 et 8, **caractérisé en ce que** le matériau de renforcement et la matrice sont superposés en couches alternantes.

10. Matériau composite renforcé par des fibres selon l'une des revendications précédentes, **caractérisé en ce que** la matrice, elle, sous forme de fibres ou de petits rubans aptes à être aiguilletés, est aiguilletée avec un matelas de matériau de renforcement ou, sous forme de fibres aptes à être filées, est filée en fil avec le matériau de renforcement ou disposée comme tissu mélangé.

11. Procédé pour la fabrication d'un matériau composite renforcé par des fibres selon l'une des revendications précédentes, **caractérisé en ce que** le matériau de la matrice est dissous et le matériau de renforcement est imprégné de la solution et ensuite le solvant est évacué dans l'air.

12. Procédé pour la fabrication d'un matériau composite renforcé par des fibres selon la revendication 11, **caractérisé en ce que** le matériau de renforcement imprégné est réchauffé à 30°C-50°C au-dessus de la température de fusion en fonction de la structure, et moulé par pression.

13. Procédé pour la fabrication d'un matériau composite renforcé par des fibres selon l'une des revendications 1 à 10, **caractérisé en ce que** le matériau de renforcement est disposé en couches en fonction de la structure, sous forme de tissus, de nattes ou de matelas en alternance avec des feuilles faites d'un matériau de la matrice et les couches sont réchauffées à 30°C-50°C au-dessus de la température de fusion et pressées.

14. Procédé pour la fabrication d'un matériau composite renforcé par des fibres selon l'une des revendications 11 à 13, **caractérisé en ce que** le pressage se fait sous une pression de 15 bars.

15. Procédé pour la fabrication d'un matériau composite renforcé par des fibres selon l'une des revendications 11 à 14, **caractérisé en ce que** les couches ou le mélange de matériau de renforcement et de matrice sont réchauffés par un chauffage infrarouge ou un autre chauffage à effet rapide à 30°C-50°C au-dessus de la température de fusion et ensuite pressées dans un outil de formage froid.

16. Procédé pour la fabrication d'un matériau composite renforcé par des fibres selon l'une des revendications 1 à 10, **caractérisé en ce que** le matériau de la matrice, sous forme de fibres courtes, de fibres longues ou de petits rubans, est aiguilleté avec un matelas de fibres naturelles ou filé en fil avec des fibres naturelles ou ouvré en tissu mélangé avec des fils de fibres naturelles et **en ce que** le produit semi-ouvré résultant est réchauffé à 30°C-50°C au-dessus de la température de fusion et pressé.

17. Procédé pour la fabrication d'un matériau composite renforcé par des fibres selon l'une des revendications 12, 13, 15 ou 16, **caractérisé en ce que** le réchauffage se fait à 40°C au-dessus de la température de fusion.

18. Procédé pour la fabrication d'un matériau composite renforcé par des fibres selon l'une des revendications 1 à 10 pour la fabrication d'éléments structuraux.
